# EUROPEAN PATENT SPECIFICATION

(11) **EP 3 383 096 B1**
(45) Date of publication and mention of the grant of the patent: **26.06.2024**
(21) Application number: 18165115.9
(22) Date of filing: 29.03.2018
(51) Int. Cl.: H04W 48/18, H04W 76/18, H04W 8/24

(54) **DEVICE AND METHOD OF HANDLING RADIO ACCESS TECHNOLOGY CAPABILITIES**
VORRICHTUNG UND VERFAHREN ZUR HANDHABUNG VON FUNKZUGANGSTECHNOLOGIEFÄHIGKEITEN
DISPOSITIF ET PROCÉDÉ DE GESTION DE CAPACITÉS DE TECHNOLOGIE D'ACCÈS RADIO

(30) Priority: 30.03.2017 US 201762479279 P
(43) Date of publication of application: 03.10.2018
(73) Proprietor: HTC Corporation, Taoyuan City 330, (TW)
(72) Inventor: WU, Chih-Hsiang, 330 Taoyuan District, Taoyuan City (TW)
(74) Representative: Schmidbauer, Andreas Konrad

(56) References cited:
- EP-A1- 2 194 744
- US-A1- 2005 288 016
- US-A1- 2015 245 256
- US-A1- 2016 112 916
- NTT DOCOMO: "Introduction of Fast Redirection to LTE", 3GPP DRAFT; R2-083929_FASTREDIRECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080812, 12 August 2008 (2008-08-12), XP050319115, [retrieved on 2008-08-12]

## Description

### Background of the Invention

### 1. Field of the Invention

The present invention relates to a communication device and a method used in a wireless communication system, and more particularly, to a communication device and a method for handling radio access technology capabilities.

### 2. Description of the Prior Art

A long-term evolution (LTE) system is developed by the 3rd Generation Partnership Project (3GPP) as a successor of an universal mobile telecommunications system (UMTS), to further enhance performance of the UMTS to satisfy increasing needs of users.

EP 2 194 744 A1 discloses a method of setting radio access capability for a mobile device capable of a plurality of radio access technologies includes utilizing a first one of the radio access technologies to send subscribing information of the mobile device to a network, receiving a reject message corresponding to the subscribing information from the network, selecting a second radio access technology from the plurality of radio access technologies, and sending the subscribing information according to the second radio access technology.

US 2015/0245256 A1 relates to reducing or mitigating no-service delays for LTE capable wireless devices which do not have permission to access one or more LTE networks. According to some embodiments, a MME of a first PLMN may receive an LTE NAS request corresponding to a tracking area from a wireless device. The MME may determine to reject the request, and may send a rejection response to the request indicating that access to the first PLMN in the tracking area according to LTE is not available to the wireless device. The rejection response may further include extended cause information relating to whether or not the wireless device is permitted to access the first PLMN in other tracking areas according to LTE.

US 2005/0288016 A1 discloses that a wireless communications device sends a communication, for example, a registration request, to a communications network, and then receives a message from the network, for example, a registration reject message, in response to the communication sent. In one embodiment, the message received from the network includes information identifying a network portion, for example, one or more location areas to which the wireless communications device is prohibited from registering. In one embodiment, multiple prohibited location areas are identified as a range of location areas.

### Summary of the Invention

The present invention therefore provides a communication device and network for handling radio access technology capabilities to solve the abovementioned problem.

The present invention is defined by the appended independent claims. Further embodiments of the invention are defined by the appended dependent claims.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of another process.
Fig. 5 is a flowchart of still another process.

### Detailed Description

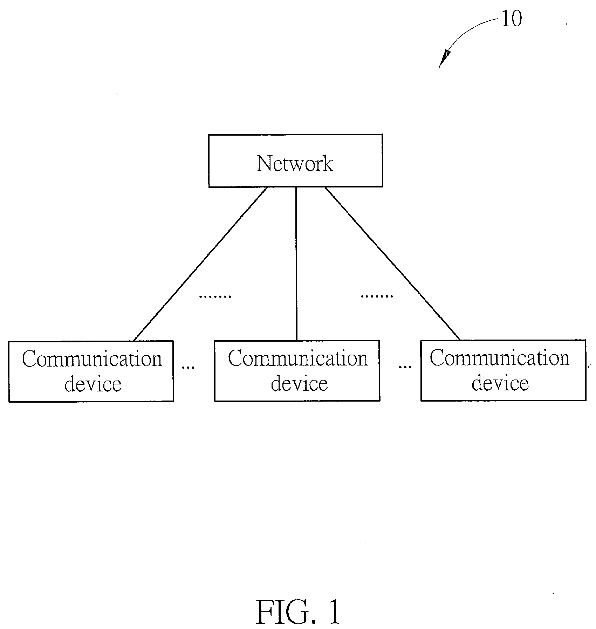

Fig. 1 is a schematic diagram of a wireless communication system 10 according to an example of the present invention. The wireless communication system 10 is briefly composed of a network and a plurality of communication devices . The network and a communication device may communicate with each other via one or more carriers or via one or multiple cells (e.g., multiple carriers) belonging to one or multiple nodes (e.g., base stations (BSs)).

In Fig. 1, the network and the communication devices are simply utilized for illustrating the structure of the wireless communication system 10. The network may include at least one of a long-term evolution (LTE) network and a new radio (NR) network. The LTE network (e. g. , an evolved Universal Terrestrial Radio Access Network (E-UTRAN)) may include at least one evolved Node-B (eNB). The eNB may connect to an evolved packet core (EPC) or a Next Generation Core (NGC) . The NR network may include a fifth generation (5G) radio access network including at least one of a 5G base station (BS) (or called gNB). The 5G BS may connect to the NGC.

An eNB may connect to the EPC and/or the NGC. The UE may know that the eNB supports connecting to the NGC according to system information broadcasted by the eNB. In a typical configuration (e. g. , configured by the system information or configured by software in the UE), the UE attaches to the NGC via the eNB according to NR non-access stratum (NAS) messages. That is, the eNB acts as an enhanced LTE (eLTE) eNB for the UE.

A communication device may be a user equipment (UE), a mobile phone, a laptop, a tablet computer, an electronic book, a portable computer system, a vehicle, a ship or an aircraft. In addition, the network and the communication device can be seen as a transmitter or a receiver according to direction (i.e. , transmission direction), e.g., for an uplink (UL), the communication device is the transmitter and the network is the receiver, and for a downlink (DL), the network is the transmitter and the communication device is the receiver.

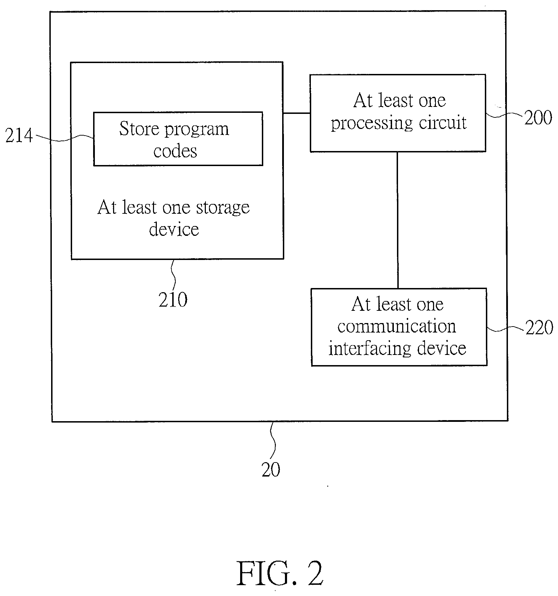

Fig. 2 is a schematic diagram of a communication device 20 according to an example of the present invention. The communication device 20 may be a communication device or the network shown in Fig. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include but are not limited to a subscriber identity module (SIM), read-only memory (ROM), flash memory, random-access memory (RAM), hard disk, optical data storage device, non-volatile storage device, non-transitory computer-readable medium (e.g., tangible media), etc. The at least one communication interfacing device 220 includes at least one transceiver and is used to transmit and receive signals (e.g., data, messages and/or packets) according to processing results of the at least one processing circuit 200.

In the following examples, a UE is used to represent a communication device in Fig. 1, to simplify the illustration of the embodiments.

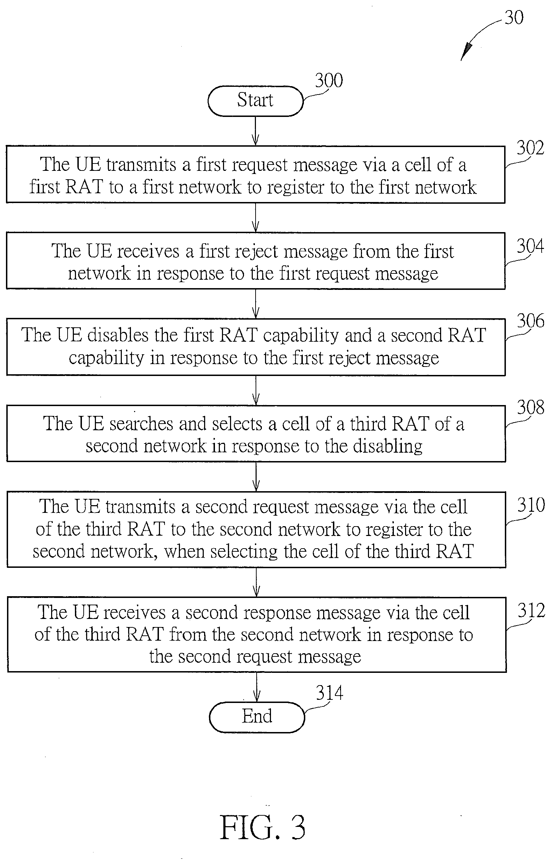

A process 30 in Fig. 3 may be utilized in a UE, and includes the following steps:

| | |
|---|---|
| Step 300: | Start. |
| Step 302: | The UE transmits a first request message via a cell of a first radio access technology (RAT) to a first network to register to the first network. |
| Step 304: | The UE receives a first reject message from the first network in response to the first request message. |
| Step 306: | The UE disables the first RAT capability and a second RAT capability in response to the first reject message. |
| Step 308: | The UE searches and selects a cell of a third RAT of a second network in response to the disabling. |
| Step 310: | The UE transmits a second request message via the cell of the third RAT to the second network to register to the second network, when selecting the cell of the third RAT. |
| Step 312: | The UE receives a second response message via the cell of the third RAT from the second network in response to the second request message. |
| Step 314: | End. |

According to the process 30, the UE does not scan frequencies to search the cell of the second RAT in order to register to a third network via the cell of the second RAT, since the UE may be rejected by the third network. Thus, power consumption of the UE is saved.

In one example, when (or if) the UE disables the first RAT capability and the second RAT capability, the UE switches off a first RAT modem of the first RAT and a second RAT modem of the second RAT or switches off a first RAT transceiver of the first RAT and a second RAT transceiver of the second RAT. In one example, when the UE disables the first RAT capability and the second RAT capability in response to the disabling, the UE may switch a mode of the first RAT modem from a normal mode to a low power mode or a sleep mode, and switch a mode of the second RAT modem from a normal mode to a low power mode or a sleep mode. In one example, the UE switches a mode of the first RAT transceiver from a receiving mode to a low power mode or a sleep mode, and switch a mode of the second RAT transceiver from a receiving mode to a low power mode or a sleep mode. Thus, the first RAT capability and the second RAT capability are not functioned in the UE, until the UE (re) enables the first RAT capability and the second RAT capability, or until the UE is switched off and then switched on. In response to (re) enabling the first RAT capability, the UE may switch on the first RAT modem or switch the first RAT modem or the first RAT transceiver to a normal mode. In response to (re)enabling the second RAT capability, the UE may switch on the second RAT modem or switch the second RAT modem or the second RAT transceiver to a normal mode.

In one example, the first network is an EPC network and the third network is a NGC network, or the first network is the NGC network and the third network is the EPC network. In one example, the first network and the third network are a same network, e.g., the NGC network. In one example, the first RAT is LTE (or called E-UTRA) and the second RAT is NR. In one example, the first request message and the first reject message are NAS messages for an Evolved Packet System (EPS). In one example, the first RAT is NR and the second RAT is LTE. In one example, the first request message and the first reject message are NAS messages for a NextGen system (NGS).

In one example, the first request message is an ATTACH REQUEST message, a TRACKING AREA UPDATE REQUEST message or a REGISTRATION REQUEST message for the EPS or the NGS.

In one example, the second request message does not indicate (or include) the first RAT capability and the second RAT capability. In one example, the third RAT is a GSM EDGE Radio Access (GERA) or a UTRA, wherein GSM and EDGE are abbreviations of "global system for mobile communications" and "enhanced data rates for GSM evolution", respectively. In one example, the second request message is a LOCATION UPDATING REQUEST message, a ROUTING AREA UPDATE REQUEST message or an ATTACH REQUEST message. In one example, the second response message is a LOCATION UPDATING ACCEPT message, a ROUTING AREA UPDATE REQUEST message or an ATTACH ACCEPT message.

In one example, the first reject message includes a first cause value.

In one example, when (or if) the UE disables the first RAT capability and the second RAT capability, the second request message may not indicate the first RAT and the second RAT.

In one example, the UE disables the first RAT capability and does not disable the second RAT capability, if the UE receives a second reject message instead of the first reject message from the first network in response to the first request message. In one example, the second reject message includes a second cause value which is different from the first cause value. In this case, the UE searches and selects the cell of the second RAT or the cell of the third RAT in response to the disabling the first RAT capability. In one example, the UE transmits the second request message via the cell of the third RAT, and the second request message does not indicate the first RAT capability. The second request message may or may not indicate the second RAT capability. In one example, the UE transmits a third request message via the cell of the second RAT to the third network. The UE may receive a third response message or a third reject message via the cell of the second RAT from the third network in response to the third request message.

In one example, the UE neither disables the first RAT capability nor disables the second RAT capability, if the UE receives a fourth reject message instead of any of the first reject message and the second reject message from the first network via the cell of the first RAT in response to the first request message. The fourth reject message may include a third cause value which is different from any of the first cause value and the second cause value. The UE searches and selects another cell of the first RAT, the cell of the second RAT or the cell of the third RAT in response to the fourth reject message. In one example, the UE transmits the second request message to the second network via the cell of the third RAT. In one example, the UE transmits the third request message to the third network via the cell of the second RAT. The UE may transmit the first request message to the first network via the other cell of the first RAT.

In one example, any of the reject messages may be an ATTACH REJECT message, a TRACKING AREA UPDATE REJECT message or a REGISTRATION REJECT message for the EPS or the NGS.

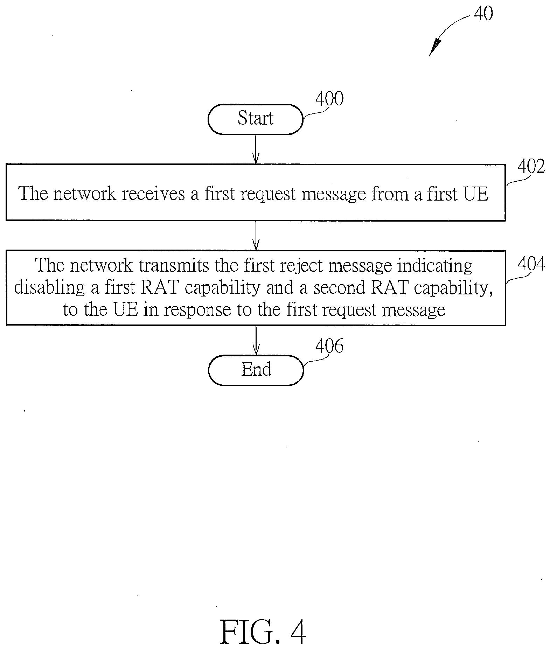

A process 40 in Fig. 4 may be utilized in a network in Fig. 1, and includes the following steps:

| | |
|---|---|
| Step 400: | Start. |
| Step 402: | The network receives a first request message from a first UE. |
| Step 404: | The network transmits the first reject message indicating disabling a first RAT capability and a second RAT capability, to the UE in response to the first request message. |
| Step 406: | End. |

As described in the description for the process 30, when the first UE receives the first reject message, the first UE disables the first RAT capability and the second RAT capability. Examples in the description for the process 30 may be applied to the process 40, and are not repeated herein.

In one example, the network determines to transmit the first reject message according to a subscription profile of the first UE. In one example, the network receives the first request message from a second UE, and determines to transmit the second reject message to the first UE according to a subscription profile of the second UE. In one example, the subscription profile of the first UE indicates that the first UE is not allowed to use the first RAT and the second RAT. The subscription profile of the second UE indicates that the UE is not allowed to use the first RAT and may be allowed to use the second RAT.

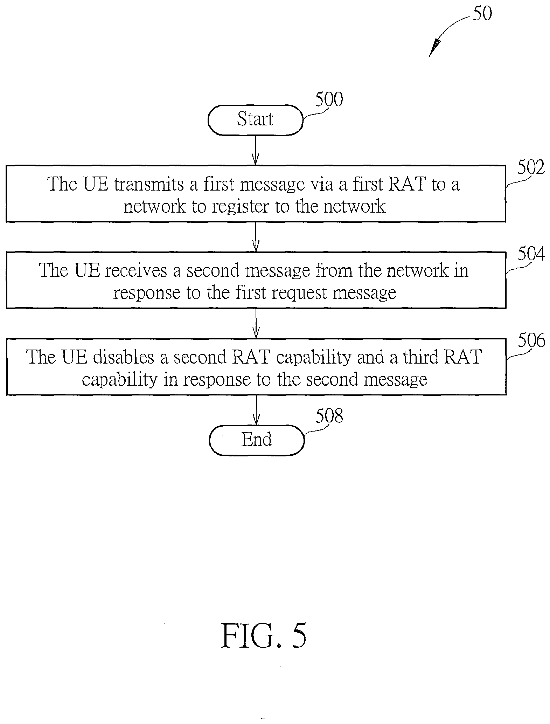

A process 50 in Fig. 5 may be utilized in a UE, and includes the following steps:

| | |
|---|---|
| Step 500: | Start. |
| Step 502: | The UE transmits a first message via a first RAT to a network to register to the network. |
| Step 504: | The UE receives a second message from the network in response to the first request message. |
| Step 506: | The UE disables a second RAT capability and a third RAT capability in response to the second message. |
| Step 508: | End. |

In one example, the network may be a GSM network, a General Packet Radio System (GPRS) network or a UMTS network. The first RAT may be the GERA or the UTRA, the second RAT may be the E-UTRA and the third RAT may be the NR. In one example, the first RAT may be the E-UTRA, the second RAT may be the NR and the third RAT may be a next generation RAT of the NR.

In one example, the first message is an ATTACH REQUEST message, a TRACKING AREA UPDATE REQUEST message, a REGISTRATION REQUEST message, a LOCATION UPDATING REQUEST message or a ROUTING AREA UPDATE REQUEST message. In one example, the second message is an ATTACH ACCEPT message, a TRACKING AREA UPDATE ACCEPT message, REGISTRATION ACCEPT message, a LOCATION UPDATING ACCEPT message or a ROUTING AREA UPDATE REQUEST message.

After the UE receives the second message, the UE may select a second cell of the first RAT to transmit a third message. The UE receives a fourth message for responding to the third message, from the second cell.

In one example, the second message may indicate the UE to disable the second RAT capability and the third RAT capability.

Examples of disabling the second RAT capability and the third RAT capability may be derived from examples of disabling the first RAT capability and the second RAT capability in the process 30, by replacing "the first RAT capability" with the "third RAT capability".

Those skilled in the art should readily make combinations, modifications and/or alterations on the abovementioned description and examples. For example, the skilled person easily makes new embodiments of the network based on the embodiments and examples of the UE, and makes new embodiments of the UE based on the embodiments and examples of the network. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20. Any of the above processes and examples above may be compiled into the program codes 214.

To sum up, the present invention provides a communication device and a method for handling RAT capabilities . The communication device does not scan frequencies to search a cell of a RAT wherein a network of the RAT may reject the communication device. Thus, power consumption of the communication device is saved.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A user equipment, UE, (20) for handling radio access technology, RAT, capabilities, comprising:
a storage device (210); and
a processing circuit (200), coupled to the storage device (210), wherein the storage device (210) stores, and the processing circuit (200) is configured to execute, instructions of:
transmitting (302) a first request message via a cell of a first RAT to a first core network to register to the first core network;
receiving (304) a first reject message from the first core network in response to the first request message;
disabling (306) the first RAT capability and a second RAT capability in response to the first reject message;
searching and selecting (308) a cell of a third RAT of a second core network in response to the disabling, wherein the first core network is an evolved packet core, EPC, network and the second core network is a next generation core, NGC, network, or the first core network is a NGC network and the second core network is EPC network;
transmitting (310) a second request message via the cell of the third RAT to the second core network to register to the second core network, when selecting the cell of the third RAT; and
receiving (312) a second response message via the cell of the third RAT from the second core network in response to the second request message.

2. The UE (20) of claim 1, wherein the instructions further comprise:
switching off a first RAT modem of the first RAT and a second RAT modem of the second RAT, when the UE (20) disables the first RAT capability and the second RAT capability; or
switching off a first RAT transceiver of the first RAT and a second RAT transceiver of the second RAT, when the UE (20) disables the first RAT capability and the second RAT capability.

3. The UE (20) of claim 1, wherein the instructions further comprise:
switching a mode of a first RAT modem of the first RAT from a first normal mode to a first low power mode or a first sleep mode and switching a mode of a second RAT modem of the second RAT from a second normal mode to a second low power mode or a second sleep mode, when the UE (20) disables the first RAT capability and the second RAT capability; or
switching a mode of a first RAT transceiver of the first RAT from a first receiving mode to a first low power mode or a first sleep mode and switching a second RAT transceiver of the second RAT from a second receiving mode to a second low power mode or a second sleep mode, when the UE (20) disables the first RAT capability and the second RAT capability.

4. The UE (20) of claim 1, wherein the first RAT is long-term evolution, LTE, and the second RAT is new radio, NR, or the first RAT is NR and the second RAT is LTE.

5. The UE (20) of claim 1, wherein the second request message does not indicate the first RAT capability and the second RAT capability.

6. A method of handling radio access technology, RAT, capabilities of a user equipment, UE, (20), wherein the method is performed by the UE (20), the method comprising:
transmitting (302) a first request message via a cell of a first RAT to a first core network to register to the first core network;
receiving (304) a first reject message from the first core network in response to the first request message;
disabling (306) the first RAT capability and a second RAT capability in response to the first reject message;
searching and selecting (308) a cell of a third RAT of a second core network in response to the disabling, wherein the first core network is an evolved packet core, EPC, network and the second core network is a next generation core, NGC, network, or the first core network is a NGC network and the second core network is EPC network;
transmitting (310) a second request message via the cell of the third RAT to the second core network to register to the second core network, when selecting the cell of the third RAT; and
receiving (312) a second response message via the cell of the third RAT from the second core network in response to the second request message.

7. The method of claim 6, further comprising:
switching off a first RAT modem of the first RAT and a second RAT modem of the second RAT, when the UE (20) disables the first RAT capability and the second RAT capability; or
switching off a first RAT transceiver of the first RAT and a second RAT transceiver of the second RAT, when the UE (20) disables the first RAT capability and the second RAT capability.

8. The method of claim 6, further comprising:
switching a mode of a first RAT modem of the first RAT from a first normal mode to a first low power mode or a first sleep mode and switching a mode of a second RAT modem of the second RAT from a second normal mode to a second low power mode or a second sleep mode, when the UE (20) disables the first RAT capability and the second RAT capability; or
switching a mode of a first RAT transceiver of the first RAT from a first receiving mode to a first low power mode or a first sleep mode and switching a second RAT transceiver of the second RAT from a second receiving mode to a second low power mode or a second sleep mode, when the UE (20) disables the first RAT capability and the second RAT capability.

9. The method of claim 6, wherein the first RAT is long-term evolution, LTE, and the second RAT is new radio, NR, or the first RAT is NR and the second RAT is LTE.

10. The method of claim 6, wherein the second request message does not indicate the first RAT capability and the second RAT capability.

## Patentansprüche

1. Ein Benutzergerät, UE, (20) zur Handhabung von Fähigkeiten hinsichtlich Funkzugangstechnologien, RAT, wobei das UE Folgendes aufweist:
eine Speichervorrichtung (210); und
eine Verarbeitungsschaltung (200), die mit der Speichervorrichtung (210) gekoppelt ist, wobei die Speichervorrichtung (210) die folgenden Anweisungen speichert und die Verarbeitungsschaltung (200) so konfiguriert ist, dass sie diese ausführt:
Übertragen (302) einer ersten Anforderungsnachricht über eine Zelle eines ersten RAT an ein erstes Kernnetz, um sich bei dem ersten Kernnetz zu registrieren;
Empfangen (304) einer ersten Ablehnungsnachricht vom ersten Kernnetz als Antwort auf die erste Anforderungsnachricht;
Deaktivieren (306) der ersten RAT-Fähigkeit und einer zweiten RAT-Fähigkeit als Reaktion auf die erste Zurückweisungsnachricht;
Suchen und Auswählen (308) einer Zelle eines dritten RAT eines zweiten Kernnetzes als Reaktion auf die Deaktivierung, wobei das erste Kernnetz ein EPC-Netz (Evolved Packet Core) und das zweite Kernnetz ein NGC-Netz (Next Generation Core) ist oder das erste Kernnetz ein NGC-Netz und das zweite Kernnetz ein EPC-Netz ist;
Übertragen (310) einer zweiten Anforderungsnachricht über die Zelle des dritten RAT an das zweite Kernnetz, um sich bei dem zweiten Kernnetz zu registrieren, wenn die Zelle des dritten RAT ausgewählt wird; und
Empfangen (312) einer zweiten Antwortnachricht über die Zelle des dritten RAT von dem zweiten Kernnetz als Antwort auf die zweite Anforderungsnachricht.

2. UE (20) nach Anspruch 1, wobei die Anweisungen ferner Folgendes umfassen:
Abschalten eines ersten RAT-Modems des ersten RAT und eines zweiten RAT-Modems des zweiten RAT, wenn das UE (20) die erste RAT-Fähigkeit und die zweite RAT-Fähigkeit deaktiviert; oder
Abschalten eines ersten RAT-Transceivers des ersten RAT und eines zweiten RAT-Transceivers des zweiten RAT, wenn das UE (20) die erste RAT-Fähigkeit und die zweite RAT-Fähigkeit deaktiviert.

3. UE (20) nach Anspruch 1, wobei die Anweisungen ferner Folgendes umfassen:
Umschalten eines Modus eines ersten RAT-Modems des ersten RAT von einem ersten Normalmodus in einen ersten Energiesparmodus oder einen ersten Schlafmodus und Umschalten eines Modus eines zweiten RAT-Modems des zweiten RAT von einem zweiten Normalmodus in einen zweiten Energiesparmodus oder einen zweiten Schlafmodus, wenn das UE (20) die erste RAT-Fähigkeit und die zweite RAT-Fähigkeit deaktiviert; oder
Umschalten eines Modus eines ersten RAT-Transceivers des ersten RAT von einem ersten Empfangsmodus in einen ersten Energiesparmodus oder einen ersten Schlafmodus und Umschalten eines zweiten RAT-Transceivers des zweiten RAT von einem zweiten Empfangsmodus in einen zweiten Energiesparmodus oder einen zweiten Schlafmodus, wenn das UE (20) die erste RAT-Fähigkeit und die zweite RAT-Fähigkeit deaktiviert.

4. UE (20) nach Anspruch 1, wobei das erste RAT Long Term Evolution, LTE, und das zweite RAT New Radio, NR, ist oder das erste RAT NR und das zweite RAT LTE ist.

5. UE (20) nach Anspruch 1, wobei die zweite Anforderungsnachricht nicht die erste RAT-Fähigkeit und die zweite RAT-Fähigkeit angibt.

6. Verfahren zur Handhabung von Fähigkeiten eines Benutzergeräts, UE, (20), hinsichtlich Funkzugangstechnologien, RAT, wobei das Verfahren durch das UE (20) ausgeführt wird, wobei das Verfahren Folgendes umfasst:
Übertragen (302) einer ersten Anforderungsnachricht über eine Zelle eines ersten RAT an ein erstes Kernnetz, um sich bei dem ersten Kernnetz zu registrieren;
Empfangen (304) einer ersten Ablehnungsnachricht vom ersten Kernnetz als Antwort auf die erste Anforderungsnachricht;
Deaktivieren (306) der ersten RAT-Fähigkeit und einer zweiten RAT-Fähigkeit als Reaktion auf die erste Zurückweisungsnachricht;
Suchen und Auswählen (308) einer Zelle eines dritten RAT eines zweiten Kernnetzes als Reaktion auf die Deaktivierung, wobei das erste Kernnetz ein EPC-Netz (Evolved Packet Core) und das zweite Kernnetz ein NGC-Netz (Next Generation Core) ist oder das erste Kernnetz ein NGC-Netz und das zweite Kernnetz ein EPC-Netz ist;
Übertragen (310) einer zweiten Anforderungsnachricht über die Zelle des dritten RAT an das zweite Kernnetz, um sich bei dem zweiten Kernnetz zu registrieren, wenn die Zelle des dritten RAT ausgewählt wird; und
Empfangen (312) einer zweiten Antwortnachricht über die Zelle des dritten RAT von dem zweiten Kernnetz als Antwort auf die zweite Anforderungsnachricht.

7. Das Verfahren nach Anspruch 6, wobei das Verfahren ferner Folgendes umfasst:
Abschalten eines ersten RAT-Modems des ersten RAT und eines zweiten RAT-Modems des zweiten RAT, wenn das UE (20) die erste RAT-Fähigkeit und die zweite RAT-Fähigkeit deaktiviert; oder
Abschalten eines ersten RAT-Transceivers des ersten RAT und eines zweiten RAT-Transceivers des zweiten RAT, wenn das UE (20) die erste RAT-Fähigkeit und die zweite RAT-Fähigkeit deaktiviert.

8. Das Verfahren nach Anspruch 6 , wobei das Verfahren ferner Folgendes umfasst:
Umschalten eines Modus eines ersten RAT-Modems des ersten RAT von einem ersten Normalmodus in einen ersten Energiesparmodus oder einen ersten Schlafmodus und Umschalten eines Modus eines zweiten RAT-Modems des zweiten RAT von einem zweiten Normalmodus in einen zweiten Energiesparmodus oder einen zweiten Schlafmodus, wenn das UE (20) die erste RAT-Fähigkeit und die zweite RAT-Fähigkeit deaktiviert; oder
Umschalten eines Modus eines ersten RAT-Transceivers des ersten RAT von einem ersten Empfangsmodus in einen ersten Energiesparmodus oder einen ersten Schlafmodus und Umschalten eines zweiten RAT-Transceivers des zweiten RAT von einem zweiten Empfangsmodus in einen zweiten Energiesparmodus oder einen zweiten Schlafmodus, wenn das UE (20) die erste RAT-Fähigkeit und die zweite RAT-Fähigkeit deaktiviert.

9. Verfahren nach Anspruch 6, wobei das erste RAT Long Term Evolution, LTE, und das zweite RAT New Radio, NR, ist oder das erste RAT NR und das zweite RAT LTE ist.

10. Verfahren nach Anspruch 6, wobei die zweite Anforderungsnachricht nicht die erste RAT-Fähigkeit und die zweite RAT-Fähigkeit angibt.

## Revendications

1. Un équipement utilisateur, UE, (20) pour gérer les capacités de la technologie d'accès radio, RAT, comprenant :
un dispositif de stockage (210) ; et
un circuit de traitement (200), couplé au dispositif de stockage (210), dans lequel le dispositif de stockage (210) stocke, et le circuit de traitement (200) est configuré pour exécuter, des instructions de :
transmettre (302) un premier message de demande via une cellule d'une première RAT à un premier réseau central pour s'enregistrer dans le premier réseau central ;
recevoir (304) un premier message de rejet du premier réseau central en réponse au premier message de demande ;
désactiver (306) la première capacité RAT et une deuxième capacité RAT en réponse au premier message de rejet ;
recherche et sélection (308) d'une cellule d'une troisième RAT d'un deuxième réseau central en réponse à la désactivation, le premier réseau central étant un réseau EPC (evolved packet core) et le deuxième réseau central un réseau NGC (next generation core), ou le premier réseau central un réseau NGC et le deuxième réseau central un réseau EPC ;
transmettre (310) un deuxième message de demande via la cellule de la troisième RAT au deuxième réseau central pour s'enregistrer dans le deuxième réseau central, lors de la sélection de la cellule de la troisième RAT ; et
recevoir (312) un deuxième message de réponse via la cellule de la troisième RAT en provenance du deuxième réseau central en réponse au deuxième message de demande.

2. L'UE (20) de la revendication 1, dans lequel les instructions comprennent en outre :
désactiver un premier modem RAT de la première RAT et un deuxième modem RAT de la deuxième RAT, lorsque l'UE (20) désactive la capacité de la première RAT et la capacité de la deuxième RAT ; ou
désactiver un premier émetteur-récepteur RAT de la première RAT et un deuxième émetteur-récepteur RAT de la deuxième RAT, lorsque l'UE (20) désactive la capacité de la première RAT et la capacité de la deuxième RAT.

3. L'UE (20) de la revendication 1, dans lequel les instructions comprennent en outre :
commuter un mode d'un premier modem RAT de la première RAT d'un premier mode normal à un premier mode faible consommation ou à un premier mode veille et commuter un mode d'un deuxième modem RAT de la deuxième RAT d'un deuxième mode normal à un deuxième mode faible consommation ou à un deuxième mode veille, lorsque l'UE (20) désactive la première capacité RAT et la deuxième capacité RAT ; ou
commuter un mode d'un premier émetteur-récepteur RAT de la première RAT d'un premier mode de réception à un premier mode à faible consommation ou à un premier mode de veille et commuter un deuxième émetteur-récepteur RAT de la deuxième RAT d'un deuxième mode de réception à un deuxième mode à faible consommation ou à un deuxième mode de veille, lorsque l'UE (20) désactive la capacité de la première RAT et la capacité de la deuxième RAT.

4. L'UE (20) de la revendication 1, dans lequel la première RAT est une évolution à long terme, LTE, et la deuxième RAT est une nouvelle radio, NR, ou la première RAT est NR et la deuxième RAT est LTE.

5. L'UE (20) de la revendication 1, dans lequel le deuxième message de demande n'indique pas la première capacité RAT et la deuxième capacité RAT.

6. Méthode de gestion des capacités de technologie d'accès radio (RAT) d'un équipement utilisateur (UE) (20), dans laquelle la méthode est exécutée par l'UE (20), la méthode comprenant :
transmettre (302) un premier message de demande via une cellule d'une première RAT à un premier réseau central pour s'enregistrer dans le premier réseau central ;
recevoir (304) un premier message de rejet du premier réseau central en réponse au premier message de demande ;
désactiver (306) la première capacité RAT et d'une deuxième capacité RAT en réponse au premier message de rejet ;
rechercher et sélecter (308) une cellule d'une troisième RAT d'un deuxième réseau central en réponse à la désactivation, le premier réseau central étant un réseau EPC (evolved packet core) et le deuxième réseau central un réseau NGC (next generation core), ou le premier réseau central un réseau NGC et le deuxième réseau central un réseau EPC ;
transmettre (310) un deuxième message de demande via la cellule de la troisième RAT au deuxième réseau central pour s'enregistrer dans le deuxième réseau central, lors de la sélection de la cellule de la troisième RAT ; et
recevoir (312) un deuxième message de réponse via la cellule de la troisième RAT en provenance du deuxième réseau central en réponse au deuxième message de demande.

7. La méthode de la revendication 6, comprenant en outre :
désactiver un premier modem RAT de la première RAT et un deuxième modem RAT de la deuxième RAT, lorsque l'UE (20) désactive la capacité de la première RAT et la capacité de la deuxième RAT ; ou
désactivation d'un premier émetteur-récepteur RAT de la première RAT et d'un deuxième émetteur-récepteur RAT de la deuxième RAT, lorsque l'UE (20) désactive la capacité de la première RAT et la capacité de la deuxième RAT.

8. La méthode de la revendication 6, comprenant en outre :
commuter un mode d'un premier modem RAT de la première RAT d'un premier mode normal à un premier mode faible consommation ou à un premier mode veille et commuter un mode d'un deuxième modem RAT de la deuxième RAT d'un deuxième mode normal à un deuxième mode faible consommation ou à un deuxième mode veille, lorsque l'UE (20) désactive la première capacité RAT et la deuxième capacité RAT ; ou
commuter un mode d'un premier émetteur-récepteur RAT de la première RAT d'un premier mode de réception à un premier mode à faible consommation ou à un premier mode de veille et commuter un deuxième émetteur-récepteur RAT de la deuxième RAT d'un deuxième mode de réception à un deuxième mode à faible consommation ou à un deuxième mode de veille, lorsque l'UE (20) désactive la capacité de la première RAT et la capacité de la deuxième RAT.

9. La méthode de la revendication 6, dans laquelle la première RAT est une évolution à long terme, LTE, et la deuxième RAT est une nouvelle radio, NR, ou la première RAT est NR et la deuxième RAT est LTE.

10. La méthode de la revendication 6, dans lequel le deuxième message de demande n'indique pas la première capacité RAT et la deuxième capacité RAT.
